# EUROPÄISCHE PATENTSCHRIFT

(11) **EP 0 655 189 B1**
(45) Veröffentlichungstag und Bekanntmachung des Hinweises auf die Patenterteilung: **17.03.1999**
(21) Anmeldenummer: 94111685.7
(22) Anmeldetag: 27.07.1994
(51) Int. Cl.: A01F 15/07, A01F 15/10

(54) **Rundballenpresse**
Bailing press for cylindrical bales
Presse à faire des balles cylindriques

(30) Priorität: 26.11.1993 DE 9318117 U
(43) Veröffentlichungstag der Anmeldung: 31.05.1995
(73) Patentinhaber: Welger GmbH, D-38304 Wolfenbüttel (DE)
(72) Erfinder: Rodewald, Peter, D-38102 Braunschweig (DE); Röhrbein, Jürgen, D-38159 Vechelde (DE); Wilkens, Dieter, Dr., D-38302 Wolfenbüttel (DE)

(56) Entgegenhaltungen:
- EP-A- 0 311 775
- EP-A- 0 341 508
- DE-A- 2 740 339
- DE-A- 3 622 451
- GB-A- 2 125 948
- GB-A- 2 195 948

## Beschreibung

Die Neuerung betrifft eine Rundballenpresse für landwirtschaftliche Halmgüter, die mit einem Preßraum versehen ist, der umfangsseitig, eine Guteintrittsöffnung freilassend, durch umlaufende Preßelemente begrenzt ist, welche auf ihrer dem Preßraum zugewandten Seite im Bereich der Guteintrittsöffnung von unten kommend nach oben umlaufend angetrieben sind, und wobei zwischen einem Aufsammler und der Guteintrittsöffnung eine in gleicher Umfangsrichtung wie die Preßelemente angetriebene, umlaufende Fördereinrichtung angeordnet ist, die aus einer unmittelbar vor der Guteintrittsöffnung und oberhalb eines Zuführkanalbodens ortsfest aber drehbar im Zuführkanal angeordneten Förderwalze mit starren Zinken besteht, denen ein Abstreifgitter zugeordnet ist, wobei der Zuführkanal etwa in Höhe des Preßraumbodens in den Preßraum mündet.

Aus dem Ladewagensektor bekannte Schneidwerke werden seit einiger Zeit in zunehmendem Maße auch bei Rundballenpressen gefragt. Dabei ergeben sich u. a. Vorteile wie Dichteerhöhung des Rundballens und leichteres Auflösen beim Verwerten, insbesondere bei Silage als Preßgut. Bisher kommen Schneidwerke in Form von Förderrotoren, die mit Messern zusammenwirken, überwiegend bei Festkammerpressen mit Walzen als Preßelemente in der Praxis zum Einsatz und sind dort im Zuführkanal zwischen Aufsammler und Guteintrittsöffnung angeordnet (siehe Prospekt RP 200 der Anmelderin mit Druckvermerk BP 329/993/12/28 pl).

Diese sogennnten Walzenpressen haben zwar bezüglich Wickelerscheinungen von Silagegut um die Preßwalzen als auch wegen der mehrfachen Möglichkeit, Bindemittel durch den Spalt zwischen zwei Walzen zuzuführen, wenig Probleme, erhebliche Schwierigkeiten bereitet aber auch hier das Abstreifen des geschnittenen Materials vom Förderrotor. Dieses ist ein spezielles Rundballenpressenproblem. Einerseits ist bei allen in der Praxis arbeitenden Rundballenpressen der Drehsinn für den Rundballen an der Gutzuführöffnung stets von oben wirkend, andererseits hat der Förderrotor im Bereich der Gutzuführöffnung einen nach oben gerichteten Geschwindigkeitsvektor, so daß der Förderrotor gegen die Ballendrehung arbeitet. Materialverstopfungen im Bereich des Abstreifers und die "Überkopfmitnahme" von Material durch den Förderrotor sind die Folge. Zusätzlich erschwert wird dieses Problem bei Rundballenpressen mit endlos umlaufenden Förderbändern oder Stabförderketten, bei denen das Bindemittel nur durch die Guteintrittsöffnung während der Gutzufuhr in den Preßraum zuführbar ist.

Aus der DE-OS 27 40 339 ist eine Walzen-Rundballenpresse mit konstantem Preßraum und einem der Guteintritsöffnung vorgeschalteten Schneidwerk bekanntgeworden, bei der die Förderelemente eines Hochförderers und ein im Preßraum sich drehender Ballen in gleicher Umfangsrichtung umlaufen. Nachteilig bei diesem in der Praxis nicht bekanntgewordenen Vorschlag ist der relativ lange Abstand zwischen wirksamen Förderzinken des Schneidwerkes und dem Ballen. Ein oberes Abdeckblech soll diesen Abstand überbrücken, verursacht aber Materialstaus und bremst den sich bekanntlich in die Guteintrittsöffnung ausquillenden Ballen. Darüber hinaus ist dieser Vorschlag bauaufwendig, teuer und erfordert eine größere Baulänge der Rundballenpresse.

In der GB 2195948 A ist ebenfalls eine Walzen-Rundballenpresse mit konstantem Preßraum dargestellt und beschrieben mit einem in der Einfüllöffnung angeordneten Förderrotor, welcher mit gleicher Drehrichtung umläuft wie die Preßwalzen und mit einer von unten in den Drehbereich des Förderrotors eingreifenden, rotierenden Messerwelle zusammenwirkt. Zwischen Abstreifer und Preßwalze ist ein großer Spalt freigelassen, in dem sich Material staut bzw. von der Förderwalze vom Preßraum weg nach außen gefördert wird. Es ist keine Zuführung von Bindemittel dargestellt oder beschrieben, welches somit dem Stand der Technik entsprechend durch die Einfüllöffnung zugeführt wird.

Der Neuerung liegt die Aufgabe zugrunde, den Materialfluß der Rundballenpresse im Bereich der Guteintrittsöffnung zu verbessern sowie Abstreiferprobleme zu vermeiden und trotz Verwendung eines Schneidwerkes eine in der Baugröße kompakte Rundballenpresse zu schaffen.

Diese Aufgabe wird erfindungsgemäß dadurch gelöst, daß der Preßraum variabel ausgebildet ist und nach unten durch Walzen als Preßelement begrenzt ist während darüber angeordnete, durch Rollen geführte bzw. angetriebene Förderbänder oder Förderstabketten als Preßelement dienen, wobei der Bereich zwischen Förderwalze bzw. Abstreifgitter und unterer Umlenkrolle des im Vordergehäuse umlaufenden Förderbandes eine angetriebene, in gleicher Umfangsrichtung wie die Förderbandabschnitte umlaufende, sich über die gesamte Preßraumbreite erstreckende Preßwalze mit fördernder Umfangsfläche aufweist, welche mit Abstand zu dem Abstreifgitter etwas in den Preßraum hinein versetzt angeordnet ist und etwa unterhalb der Umlenkrolle liegt.

Durch diese Ausgestaltung wird erstmals bei einer Rundballenpresse mit variablem Preßraum und Förderbändern als Preßelemente der integrierte Einbau einer Fördereinrichtung ohne und mit Schneidwerk realisiert und insbesondere eine zentrale Zuführung von Netz und/oder Garn außerhalb der Guteintrittsöffnung geschaffen.

Die erfindungsgemäße Anordnung der Preßwalze zwischen Förderwalze bzw. Abstreifgitter und Förderbändern gewährleistet neben der Preßfunktion eine Abstreiffunktion bezüglich des Abstreifgitters und außerdem eine zuverlässige, aktive Einführung des Bindemittels in den Preßraum. Das Bindemittel (Garn) kann auch ohne Preßgut zugeführt werden und mit Netz ergibt sich eine reduzierte Bindezeit, weil das Preßgut noch während der ersten Ballenumdrehung zugeführt werden kann.

Zweckmäßigerweise ist die Rundballenpresse nach Anspruch 6 ausgebildet, weil durch diese Kurzschnittanordnung auch schwierigste Preßgüter problemlos verarbeitet werden können. Das enge Abstreifgitter verhindert die Mitnahme von Material durch die Zinken "Überkopf".

Weitere, vorteilhafte Ausgestaltungen der Neuerung sind durch die Merkmale der Unteransprüche gekennzeichnet.

In der Zeichnung ist ein Ausführungsbeispiel der Neuerung dargestellt. Es zeigen:

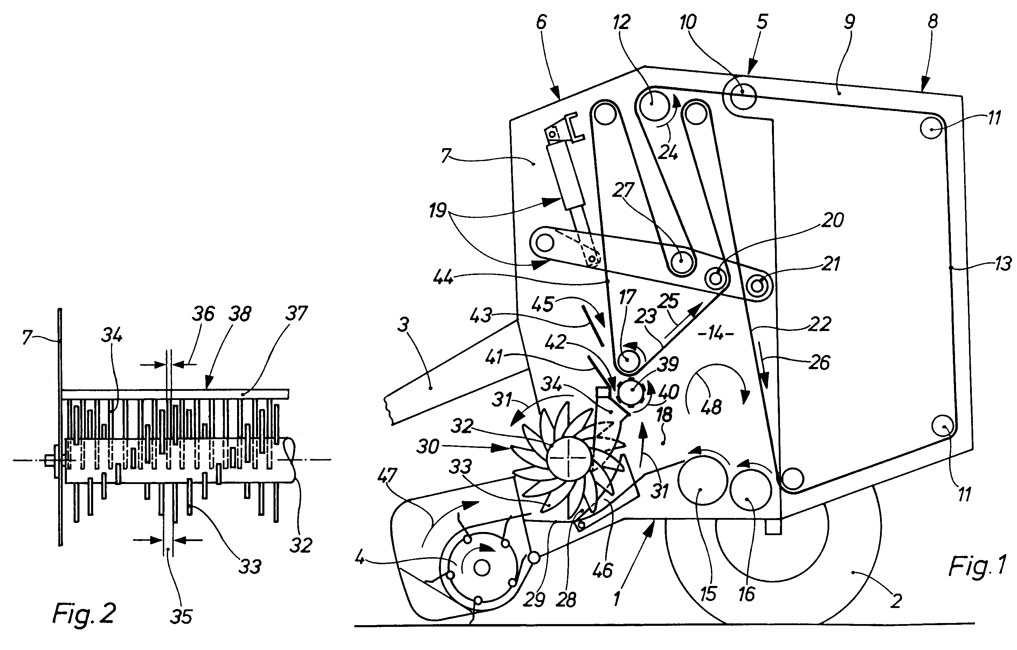

Figur 1 einen Längsschnitt einer erfindungsgemäßen Rundballenpresse mit variablem Preßraum und Förderbändern in schematischer Darstellung;
Figur 2 eine Teilansicht der Förderwalze und des Abstreifgitters von vorn gesehen auf die linke Seite der Rundballenpresse gemäß Figur 1.

Die Rundballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in Arbeitsrichtung der Rundballenpresse ein mit 4 bezifferter Aufsammler (Pick up) üblicher Bauart vorgeordnet. Die Rundballenpresse ist über eine nicht näher dargestellte Gelenkwellenverbindung antriebsmäßig mit dem Schlepper zu koppeln.

Auf dem Fahrgestell 1 ist ein allgemein mit 5 beziffertes Preßraumgehäuse angeordnet, bestehend aus einem gestellfesten Vordergehäuse 6 mit vorderen Seitenwänden 7 und aus einem gelenkig mit dem Vordergehäuse 6 verbundenen Hintergehäuse 8 mit hinteren Seitenwänden 9, welches nach Formung eines Ballens um eine obere Schwenkachse 10 zum Ballenausstoß aufklappbar ist.

Zwischen sich gegenüberliegenden, einander entsprechenden Seitenwänden 7 bzw. 9 erstrecken sich mehrere Rollen 11, 12, die drehbar an den Seitenwänden 7, 9 montiert sind. Auf den Rollen 11, 12 liegen nebeneinander in geringem Abstand angeordnet mehrere endlose Förderbänder 13, die zwischen den Seiten 7, 9 einen ausdehnbaren Ballenpreßraum 14 zum Formen eines zylindrischen Ballens bilden. Nach unten ist der Ballenpreßraum 14 durch zwei Walzen 15, 16 begrenzt, während zwischen Walze 15 und gegenüber der Walze 15 im Abstand nach vorne und oben versetzter Riemenumlenkrolle 17 eine Guteintrittsöffnung 18 freigelassen ist. Nach oben ist der Ballenpreßraum 14 durch zwei im engen gegenseitigen Abstand an einer Riemenspanneinrichtung 19 angeordnete Rollen 20, 21 abgeschlossen, die zwischen sich zwei Riemenabschnitte 22, 23 führen. Der Antrieb der Förderbänder 13 erfolgt durch die Walze 12, die beispielsweise durch einen nicht dargestellten Kettentrieb in Richtung des Pfeiles 24 angetrieben wird, wobei die Förderbandabschnitte 22, 23 in durch Pfeile 25, 26 gekennzeichnete Drehrichtung umlaufen.

Die Riemenspanneinrichtung 19 steht mit einem nicht dargestellten Hydrauliksystem in Verbindung und bewirkt ein gesteuertes Nachgeben der Rollen 20, 21, 27 und dadurch eine entsprechende Freigabe der Förderbandlänge bei zunehmendem Durchmesser des Ballens.

Die Förderung des Halmgutes erfolgt über den Aufsammler 4 durch einen Zuführkanal 28 hindurch in den Preßraum 14. Im Zuführkanal 28 ist oberhalb eines nach unten gekrümmten Zuführkanalbodens 29 eine Förderwalze 30 angeordnet. Die Förderwalze 30 ist beidendig drehbar, aber ortsfest im Zuführkanal 28 gelagert und wird in Richtung des Pfeiles 31 angetrieben. Sie besteht aus einem Mittelrohr 32, auf das eine Vielzahl in einem Abstand zueinander und schraubenförmig versetzt angeordnete Zinken 33 aufgeschweißt sind, die beim Umlauf der Förderwalze 30 in den Zuführkanal 28 wirksam eintauchen zwecks Materialförderung. Auf der der Guteintrittsöffnung 18 zugewandten Seite der Umlaufbahn der Zinken 33 greift von oben jeweils in den Spalt zwischen zwei Zinken 33 ein Abstreiffinger 34 ein. Die Spaltbreite 35 beträgt etwa 15 mm, während die etwa mittig im Spalt angeordneten Abstreiffinger 34 eine Dicke 36 von etwa 6 mm haben. Mehrere Abstreiffinger 34 sind nebeneinander auf einer sich zwischen den vorderen Seitenwänden 7 erstreckenden Querstrebe 37 befestigt und bilden ein Abstreifgitter 38, das zusammen mit dem Mittelrohr 32 die obere Zuführkanalwand darstellt.

Unmittelbar unter der Umlenkwalze 17 ist gegenüber dem Abstreifgitter 38 nach hinten in den Preßraum 14 versetzt eine Preßwalze 39 mit Mitnehmerleisten angeordnet, die in Richtung des Pfeiles 40 angetrieben wird.

Ein von oben nach unten verlaufendes Leitblech 41, das zum Teil über das Abstreifgitter 38 gezogen ist, bildet zwischen sich und der Preßwalze 39 einen Zuführspalt 42 für das Bindemittel, z. B. Garn. Ein anderes Bindemittel, z. B. Netz, kann über ein zweites, nach oben versetztes Leitblech 43 durch den gleichen Zuführspalt 42 zugeführt werden und bildet mit dem Außentrum 44 des Förderbandes 13 eine Art Zuführschacht 45.

Soll das Halmgut vor dem Pressen geschnitten werden, können von unten in den Zuführkanal 28 über dessen Breite verteilt mehrere Messer 46 eingeschwenkt werden, die mit den Zinken 33 zusammenwirken.

Die Arbeitsweise der Rundballenpresse ist wie folgt:

Zur Herstellung eines Rundballens wird das gemähte Halmgut von dem Aufsammler 4 in Richtung des Pfeiles 47 in den Zuführkanal 28 geschoben und auf kurzem Wege mittels der Förderwalze 30 in den Preßraum 14 befördert. Da der Preßraum 14 fast auf dem ganzen Umfang in gleicher Umfangsrichtung umlaufende Preßelemente (39, 23, 22, 15, 16, 30) aufweist, erfolgt der Start der Ballendrehung problemlos und die Ballendrehung in Richtung des Pfeiles 48 wird bis zu höchsten, bisher mit Rundballenpressen nicht erreichten Preßdichten aufrechterhalten. Alle Materialien werden sicher von der Förderwalze 30 abgestreift. Bei der beschriebenen Ausführung mit Förderbändern 13 erfolgt die Umschnürung nach erfolgter Ballenformung z. B. mit Garn auch ohne Gutzufuhr störungsfrei mittels Preßwalze 39 durch den Zuführspalt 42. Bei Verwendung von Netz kann man Netz und Preßmaterial sogar fast eine ganze Ballenumdrehung gleichzeitig einlaufen lassen, wodurch die Bindezeit reduziert wird.

## Patentansprüche

1. Rundballenpresse für landwirtschaftliche Halmgüter, die mit einem Preßraum (14) versehen ist, der umfangsseitig, eine Guteintrittsöffnung (18) freilassend, durch umlaufende Preßelemente begrenzt ist, welche auf ihrer dem Preßraum (14) zugewandten Seite im Bereich der Guteintrittsöffnung (18) von unten kommend nach oben umlaufend angetrieben sind, und wobei zwischen einem Aufsammler (4) und der Guteintrittsöffnung (18) eine in gleicher Umfangsrichtung (31) wie die Preßelemente (13, 15, 16) angetriebene, umlaufende Fördereinrichtung angeordnet ist, die aus einer unmittelbar vor der Guteintrittsöffnung (18) und oberhalb eines Zuführkanalbodens (29) ortsfest aber drehbar im Zuführkanal (28) angeordneten Förderwalze (30) mit starren Zinken (33) besteht, denen ein Abstreifgitter (38) zugeordnet ist, wobei der Zuführkanal (28) etwa in Höhe des Preßraumbodens in den Preßraum (14) mündet, **dadurch gekennzeichnet**, daß der Preßraum (14) variabel ausgebildet ist und nach unten durch Walzen (15, 16) als Preßelement begrenzt ist während darüber angeordnete, durch Rollen (11, 12) geführte bzw. angetriebene Förderbänder (13) oder Förderstabketten als Preßelement dienen, wobei der Bereich zwischen Förderwalze (30) bzw. Abstreifgitter (38) und unterer Umlenkrolle (17) des im Vordergehäuse (6) umlaufenden Förderbandes (13) eine angetriebene, in gleicher Umfangsrichtung (25, 26) wie die Förderbandabschnitte (22, 23) umlaufende, sich über die gesamte Preßraumbreite erstreckende Preßwalze (39) mit fördernder Umfangsfläche aufweist, welche mit Abstand zu dem Abstreifgitter (38) etwas in den Preßraum (14) hinein versetzt angeordnet ist und etwa unterhalb der Umlenkrolle (17) liegt.

2. Rundballenpresse nach Anspruch 1, **dadurch gekennzeichnet**, daß das Bindemittel wie z. B. Garn, Netz o. ä. durch einen Spalt (42) zwischen der Preßwalze (39) und dem Abstreifgitter (38) bzw. über ein das Abstreifgitter (38) im Bereich des Bindemittelzulaufes abdeckendes Leitblech (41) mittels der Preßwalze (39) dem Preßraum (14) zugeführt wird.

3. Rundballenpresse nach Anspruch 2, **dadurch gekennzeichnet**, daß die zwischen beiden Seitenwänden (7) im Zuführbereich des Bindemittels angeordneten Leitbleche (41, 43) mit dem Außentrum (44) des Förderbandes (13) eine Art Zuführschacht (45) für das Bindemittel bilden.

4. Rundballenpresse nach einem der Ansprüche 1 bis 3, **dadurch gekennzeichnet**, daß die Förderwalze (30) aus einer Vielzahl an einem Mittelrohr (32) seitlich auf Abstand zueinander und in Umfangsrichtung schraubenförmig zueinander versetzt angeordneter Zinken (33) besteht, die mit einem von oben jeweils zwischen zwei Zinken (33) eingreifenden Abstreiffinger (34) zusammenwirken.

5. Rundballenpresse nach Anspruch 4, **dadurch gekennzeichnet**, daß die Zinken (33) in senkrecht zur Mittelrohrachse parallel nebeneinanderliegenden Ebenen umlaufen, wobei die Zinken (33) in engem Abstand von etwa 15 mm nebeneinander angeordnet sind und die Abstreiffingerdicke (36) etwa die Hälfte (6 - 8 mm) der Spaltbreite (35) der Zinken (33) beträgt.

6. Rundballenpresse nach Anspruch 5, **gekennzeichnet durch** Halbringscheiben mit vorstehenden Zähnen, wobei die Innenseiten der Halbringe zumindest teilweise in nutenförmige Ausnehmungen des Mittelrohres (32) eingesetzt werden.

7. Rundballenpresse nach einem der Ansprüche 1 bis 6, **gekennzeichnet durch** von unten in den Zuführkanal (28) einragende Schneidmesser (46), welche ein- und ausschwenkbar und über die Preßraumbreite verteilt angeordnet sind.

## Claims

1. Round bale press for agricultural blade crops, which is provided with a pressing chamber (14), which, on the circumference, leaving an aperture (18) for the product to enter, is defined by revolving pressing elements, which are driven revolvingly coming from the bottom to the top on their side facing the pressing chamber (14) in the region of the product inlet aperture(18), and wherein between a pick-up (4) and the product inlet aperture (18) a revolving conveyor driven in the same circumferential direction (31) as the pressing elements (13, 15, 16) is provided, consisting of a conveying roller (30) with rigid prongs (33) which is disposed directly in front of the product inlet aperture (18) and above a supply channel base (29), so as to be fixed but rotatable in the supply channel (28), with a stripper grid (38) allocated to the prongs, with the supply channel (28) opening into the pressing chamber (14) approximately at the level of the pressing chamber base, characterised in that the pressing chamber (14) is formed to be variable and is defined at the bottom by rollers (15, 16) as a pressing element whilst conveyor belts (13) or conveyor bar chains guided or driven by pulleys (11, 12) and disposed above the rollers act as a pressing element, in which case the region between the conveyor roller (30) or stripper grid (38) and the lower deflection pulley (17) has a driven pressing roller (39) with a conveying circumferential face which revolves in the same direction (25, 26) as the conveyor belt sections, extends over the same pressing chamber width and which is disposed with clearance from the stripper grid (38) slightly offset into the pressing chamber (14) and lies approximately below the deflection pulley (17).

2. Round bale press according to claim 1, characterised in that the binding medium such as e.g. yarn, netting or the like is supplied by means of the pressing roller (39) to the pressing chamber (14) through a gap (42) between the pressing roller (39) and the stripper grid (38) or via a guide plate (41) covering the stripper grid (38) in the region of the binding medium supply.

3. Round bale press according to claim 2, characterised in that the guide plates (41, 43) disposed between the two side walls (7) in the supply region of the binding medium form with the outer trunk (44) of the conveyor belt (13) a type of supply shaft (45) for the binding medium.

4. Round bale press according to one of claims 1 to 3, characterised in that the conveyor roller (30) consists of a large number of prongs (33) spaced laterally from one another on a central tube (32) and staggered with respect to one another in the circumferential direction in a helical manner, the prongs (33) cooperating with a stripper finger (34) engaging from above between every two prongs (33).

5. Round bale press according to claim 4, characterised in that the prongs (33) revolve in planes lying adjacently parallel to one another perpendicular to the axis of the central tube, the prongs (33) being disposed adjacent to one another at a close distance of approximately 15 mm and the stripper finger thickness (36) is approximately half (6-8 mm) the gap width (35) of the prongs (33).

6. Round bale press according to claim 5, characterised by half-ring discs with projecting teeth, the inner faces of the half-rings being inserted at least partly in groove-like recesses in the central tube (32).

7. Round bale press according to one of claims 1 to 6, characterised by cutting blades (46) projecting down into the supply channel (28), which are disposed distributed over the pressing chamber width so as to pivot inwards and outwards.

## Revendications

1. Presse à ballots ronds pour des céréales agricoles, qui est équipée d'un espace de pressage (14) qui est limité, côté circonférence, par des éléments de pressage circulaires, laissant libre une ouverture d'entrée (18) des produits, lesquels éléments de pressage, sur leur côté tourné vers l'espace de pressage (14), dans la zone de l'ouverture d'entrée (18) des produits, sont entraînés de façon circulaire du bas vers le haut et où, entre un dispositif ramasseur (4) et l'ouverture d'entrée (18) des produits, est disposé un dispositif de transport circulaire entraîné dans la même direction circonférentielle (31) que les éléments de pressage (13, 15, 16), lequel dispositif de transport se compose d'un cylindre de transport (30) comprenant des dents fixes (33), ledit dispositif de transport étant disposé juste devant l'ouverture d'entrée (18) des produits et au-dessus d'un fond (29) d'un canal d'alimentation, en étant monté fixement mais pouvant être en rotation dans le canal d'alimentation (28), dents auxquelles est associée une grille racleuse (38), où le canal d'alimentation (28) débouche dans l'espace de pressage (14), à peu près à la hauteur du fond de l'espace de pressage,
caractérisée en ce que l'espace de pressage (14) est configuré de façon variable et en ce qu'il est limité vers le bas par des cylindres (15, 16) servant d'éléments de pressage, alors que des bandes transporteuses (13) ou des chaînes transporteuses à barres, disposées au-dessus desdits d'éléments de pressage, sont guidées ou entraînées par des rouleaux (11, 12), où la zone entre le cylindre de transport (30) ou la grille racleuse (38), et le rouleau de renvoi inférieur (17) de la bande transporteuse (13) se déplaçant de façon circulaire dans le carter avant (6), comprend un cylindre de pressage (39) s'étendant sur toute la largeur de l'espace de pressage et ayant une surface circonférentielle favorable, ledit cylindre de pressage étant entraîné dans la même direction circonférentielle (25, 26) que les sections (22, 23) de la bande transporteuse, lequel cylindre de pressage est disposé à distance de la grille racleuse (38) en étant un peu décalé vers l'intérieur dans l'espace de pressage (14) et il se trouve légèrement au-dessous du rouleau de renvoi (17).

2. Presse à ballots ronds selon la revendication 1, caractérisée en ce que le moyen d'attache, comme par exemple de la ficelle, un filet ou un moyen analogue est acheminé dans l'espace de pressage (14), au moyen du cylindre de pressage (39), à travers une fente (42) entre le cylindre de pressage (39) et la grille racleuse (38), ou par une tôle de guidage (41) recouvrant la grille racleuse (38) dans la zone d'arrivée du moyen d'attache.

3. Presse à ballots ronds selon la revendication 2, caractérisée en ce que les tôles de guidage (41, 43), disposées entre les deux parois latérales (7) dans la zone d'alimentation du moyen d'attache constituent avec le brin extérieur (44) de la bande transporteuse (13), une sorte de puits d'alimentation (45) pour le moyen d'attache.

4. Presse à ballots ronds selon l'une quelconque des revendications 1 à 3, caractérisée en ce que le cylindre de transport (30) se compose d'une multiplicité de dents (33) disposées sur un tube central (32), espacées latéralement les unes des autres et décalées l'une par rapport à l'autre de façon hélicoïdale dans la direction circonférentielle, lesquelles dents fonctionnent en association avec un doigt racleur (34) s'engrenant à chaque fois, par le haut, entre deux dents (33).

5. Presse à ballots ronds selon la revendication 4, caractérisée en ce que les dents (33) se déplacent dans des plans placés côte à côte et parallèles entre eux, verticalement par rapport à l'axe du tube central, où les dents (33) sont disposées les unes à côté des autres, séparées par un faible écartement de 15 mm environ, et où l'épaisseur (36) des doigts racleurs correspond à peu près à la moitié (6 mm à 8 mm) de la largeur (35) de l'écartement des dents (33).

6. Presse à ballots ronds selon la revendication 5, caractérisée par des disques demi-annulaires comprenant des dents en saillie, où les faces intérieures des demi-anneaux sont introduites au moins partiellement dans des évidements en forme de gorges du tube central (32).

7. Presse à ballots ronds selon l'une quelconque des revendications 1 à 6, caractérisée par des couteaux de découpe (46) pénétrant, par le bas, dans le canal d'alimentation (28), lesquels couteaux de découpe sont disposés en pouvant pivoter vers l'intérieur et vers l'extérieur et ils sont répartis sur la largeur de l'espace de pressage.
